# EUROPÄISCHE PATENTSCHRIFT

(11) **EP 4 325 166 B1**
(45) Veröffentlichungstag und Bekanntmachung des Hinweises auf die Patenterteilung: **04.02.2026**
(21) Anmeldenummer: 23190875.7
(22) Anmeldetag: 10.08.2023
(51) Int. Cl.: G01B 11/25, G01B 21/04, G01B 5/00, G01B 11/24

(54) **OPTISCHE PRÜFVORRICHTUNG**
OPTICAL INSPECTION APPARATUS
DISPOSITIF D'INSPECTION OPTIQUE

(30) Priorität: 15.08.2022 DE 102022120519; 21.09.2022 DE 102022124224
(43) Veröffentlichungstag der Anmeldung: 21.02.2024
(73) Patentinhaber: JENOPTIK Industrial Metrology Germany GmbH, 78052 Villingen-Schwenningen (DE)
(72) Erfinder: BOUCKY, Otto, 89564 Nattheim (DE)
(74) Vertreter: Hoefer & Partner Patentanwälte mbB

(56) Entgegenhaltungen:
- WO-A1-2013/182960
- DE-A1- 102017 124 978
- JP-B2- 4 132 736
- US-A1- 2014 193 064
- US-A1- 2015 192 404
- US-A1- 2018 364 028

## Beschreibung

Die Erfindung betrifft eine optische Prüfvorrichtung zur Prüfung von flachen Prüfobjekten.

Bei der Überprüfung von flachen Prüfobjekten wird das Prüfobjekt häufig nur von einer Seite mittels einer optischen Prüfvorrichtung erfasst und vermessen. Hierzu können beispielsweise Profilprojektoren verwendet werden, die das Prüfobjekt in seiner bilateralen Form und Lage erfassen. Durch den Herstellungsprozess des Prüfobjekts bedingte Verwindungen sind hierbei nur von geringer Bedeutung.

Sofern das Prüfobjekt eine präzise und eng tolerierte Oberflächentopographie hat, die mittels eines 3D-Messsystems erfasst werden soll, spielen Verwindungen des Prüfobjekts eine große Rolle. Um das Prüfobjekt während der Prüfung in einer Messeebene zu halten, können magnetisch oder mit Vakuumstechnik arbeitende Halterungen verwendet werden. Nach der Erfassung bzw. Vermessung einer Seite des Prüfobjekts muss dieses zur Erfassung bzw. Vermessung der anderen Seite umgespannt werden. Dies kostet Zeit und führt zu einer signifikanten Verschlechterung der Messgenauigkeit.

Durch DE 10 2015 205 461 A1 ist eine Korrekturvorrichtung für ein optisches Messgerät bekannt, bei dem im Messstrahlengang eine lichtdurchlässige Skala angeordnet ist.

Weitere Prüf- und Messvorrichtungen sind aus US 2015/192404 A1, US 2018/364028 A1, JP 4 132736 B2, US 2014/193064 A1, WO 2013/182960 A1 und DE 10 2017 124978 A1 bekannt.

Der Erfindung liegt die Aufgabe zugrunde, eine optische Prüfvorrichtung zur Prüfung von flachen Prüfobjekten anzugeben, die eine schnelle und zuverlässige Prüfung mit hoher Messgenauigkeit ermöglicht.

Die Lösung dieser Aufgabe erfolgt durch die Merkmale des unabhängigen Anspruchs. Die Unteransprüche haben vorteilhafte Weiterbildungen der Erfindung zum Inhalt.

Die Erfindung sieht eine optische Prüfvorrichtung zur Prüfung von flachen Prüfobjekten vor, die eine Halterung für das Prüfobjekt aufweist. Erfindungsgemäß weist die Prüfvorrichtung zwei optische Sensoren zur Erfassung der dreidimensionalen Oberflächentopographie des Prüfobjektes auf. Die Halterung ist erfindungsgemäß wenigstens abschnittsweise als Prüfnormal ausgebildet und derart relativ zu den Sensoren angeordnet, dass die Sensoren das Prüfobjekt von gegenüberliegenden Seiten antasten und bei der Erfassung des Prüfobjektes die Halterung als Prüfnormal wenigstens abschnittsweise miterfassen.

Der Grundgedanke der Erfindung besteht darin, die Vorder- und Rückseite eines flachen Prüfobjekts in einem gemeinsamen Messvorgang geometrisch zu erfassen und die Halterung wenigstens abschnittsweise als Prüfnormal auszubilden, das bei der Erfassung der Oberflächen des Bauteils miterfasst wird. Die Geometrie des Prüfnormals ist präzise bestimmt bzw. vorbekannt, sodass die während der Messung miterfasste Geometrie des Prüfnormals eine Referenz für die Messung bildet.

Durch die durch das Prüfnormal bereitgestellte Referenz können einerseits die gegenüberliegende Seiten des Prüfobjekts repräsentierenden Messwerte der Sensoren zueinander in Bezug gebracht werden. Zum anderen können Ausrichtungsfehler der Sensoren relativ zueinander kompensiert werden.

Beispielsweise und insbesondere kann die Halterung rahmenartig mit einer fensterartigen Aussparung ausgebildet sein und eine Auflagestruktur aufweisen, beispielsweise in Form von entlang des Umfangs der Aussparung zueinander beabstandeten Nasen, auf die das Prüfobjekt aufgelegt wird.

Bei der Prüfung wird die dreidimensionale Topographie der Oberfläche des Prüfobjektes durch Antastung durch die optischen Sensoren von beiden Seiten des Prüfobjekts erfasst. Hierbei wird erfindungsgemäß die Oberfläche der als Prüfnormal fungierenden Halterung wenigstens abschnittsweise miterfasst, sodass damit die Position des Prüfobjekts im dreidimensionalen Raum eindeutig erfasst wird. Eine vorherige mechanische oder rechnerische Ausrichtung des Prüfobjekts ist damit nicht erforderlich.

Auf diese Weise ist die Prüfung von entsprechenden Prüfobjekten vereinfacht und die Messgenauigkeit bei der Ermittlung der dreidimensionalen Topographie der Oberfläche des Prüfobjekts erhöht.

Ein besonderer Vorteil der Erfindung besteht darin, dass gleichzeitig beide Seiten des Prüfobjekts erfasst werden und die Position des Prüfobjekts während des Prüfvorganges nicht verändert wird. Dies erhöht die Prüfgeschwindigkeit wesentlich und vermeidet Messungenauigkeiten, die dann entstehen können, wenn die Position des Prüfobjekts während der Prüfung geändert werden muss, beispielsweise durch Umspannen.

Indem die Erfindung die ohnehin vorhandene Halterung für das Prüfobjekt als Prüfnormal gestaltet und verwendet, ergibt sich ein relativ einfacher Aufbau der Prüfvorrichtung.

Eine vorteilhafte Weiterbildung der Erfindung sieht vor, dass die Halterung als Rahmen ausgebildet ist. Das in dem Rahmen aufgenommene Prüfobjekt ist optisch von beiden Seiten zugänglich und kann damit durch die Sensoren angetastet werden.

Entsprechend den jeweiligen Anforderungen und Gegebenheiten ist die Ausgestaltung des Rahmens innerhalb weiter Grenzen wählbar. Eine vorteilhafte Weiterbildung sieht insoweit vor, dass der Rahmen als in Umfangsrichtung geschlossener Rahmen mit einer fensterartigen Aussparung ausgebildet ist. Der in Umfangsrichtung geschlossene Rahmen sorgt bei dieser Ausführungsform für eine hohe mechanische Stabilität der Halterung, wobei die beidseitigen Oberflächen des Prüfobjekts durch die Aussparung hindurch optisch zugänglich sind und durch die Sensoren angetastet werden können.

Eine andere vorteilhafte Weiterbildung der Erfindung sieht vor, dass der Rahmen eine Auflagestruktur aufweist, auf die das Prüfobjekt lose auflegbar ist. Bei dieser Ausführungsform wird das Prüfobjekt auf besonders einfache Weise lose auf die Auflagestruktur der Halterung aufgelegt.

Die Auflagestruktur kann entsprechend den jeweiligen Anforderungen und Gegebenheiten in vielfältiger Weise ausgebildet sein und beispielsweise aus einem transparenten Material bestehen. Die Auflagestruktur kann beispielsweise auch fadenartig ausgebildet sein und die Aussparung in der Halterung überspannen.

Eine Weiterbildung der Erfindung sieht insoweit vor, dass die Auflagestruktur in Umfangsrichtung des Rahmens zueinander beabstandete Nasen aufweist. Hierbei ist es ausreichend und im Sinne einer statischen Bestimmtheit wünschenswert, wenn drei in Umfangsrichtung des Rahmens bzw. der Aussparung in dem Rahmen zueinander beabstandete Nasen vorgesehen sind.

Entsprechend den jeweiligen Anforderungen und Gegebenheiten kann die Halterung in vielfältiger Weise ausgestaltet sein. Im Sinne eines besonders einfachen Aufbaus sieht eine vorteilhafte Weiterbildung vor, dass die Halterung als planparallele Platte ausgebildet ist. Die Platte ist hinsichtlich ihrer Dicke und Größe der Aussparung an das jeweilige Prüfobjekt, bzw. eine Familie von Prüfobjekten angepasst. Das Material der Platte kann entsprechend der jeweiligen Applikation gewählt werden, beispielsweise Aluminium für Messaufgaben mit relativ geringer Genauigkeit und Zerodur für Messaufgaben mit hoher Genauigkeit.

Eine andere vorteilhafte Weiterbildung der Erfindung sieht vor, dass die Halterung wenigstens abschnittsweise beschichtet ist. Durch die Beschichtung kann in Oberflächenbereichen der Halterung, die als Prüfnormalflächen des Prüfnormals fungieren, eine im Sinne der verwendeten optischen Sensoren gewünschte oder erforderliche Oberflächenbeschaffenheit hergestellt werden. Dies kann jedoch auch durch mechanische Bearbeitungsverfahren geschehen.

Entsprechend den jeweiligen Anforderungen und Gegebenheiten können unterschiedliche optischen Sensoren verwendet werden, wobei die Auswahl der Sensoren beispielsweise in Abhängigkeit von der Oberflächenbeschaffenheit des Prüfobjekts, dessen Aspektverhältnis, der geforderten Zykluszeit und den Toleranzen des Messsobjekts erfolgen kann. In Bezug auf die Ausgestaltung der Sensoren sieht eine vorteilhafte Weiterbildung der Erfindung vor, dass wenigstens ein optischer Sensor zur flächigen Erfassung des Prüfobjekts ausgebildet und eingerichtet ist. Aufgrund der flächigen Erfassung des Prüfobjekt ist während des Prüfvorganges eine Relativbewegung zwischen der Halterung und den Sensoren nicht erforderlich. Zur flächigen Erfassung des Prüfobjekts können beispielsweise flächige Weißlichtsensoren oder holographische Sensoren verwendet werden.

Eine andere vorteilhafte Weiterbildung der Erfindung sieht in Bezug auf die Auswahl der Sensoren vor, dass wenigstens ein optischer Sensor zur linienförmigen Erfassung des Prüfobjekts ausgebildet und eingerichtet ist, wobei eine Vorschubeinrichtung zur Relativbewegung der Halterung relativ zu den Sensoren vorgesehen ist, derart, dass während des Vorschubs das Prüfobjekt durch den Sensor abgetastet wird. Als entsprechende Sensoren können beispielsweise Lasertriangulationssensoren oder photogrammetrische Sensoren verwendet werden.

Im Übrigen sind geeignete optische Sensoren dem Fachmann allgemein bekannt und werden daher hier nicht näher erläutert.

Zur während der Prüfung gleichzeitigen Erfassung beider Seiten des Prüfobjekts sind erfindungsgemäß grundsätzlich zwei Sensoren ausreichend, von denen jeder einer Seite des Prüfobjekts zugeordnet ist. Entsprechend den jeweiligen Anforderungen und Gegebenheiten können jeder Seite des Prüfobjekts jedoch auch zwei oder mehrere Sensoren zugeordnet sein.

Soweit beide Seiten des Prüfobjekts eine gleiche oder ähnliche Oberflächenbeschaffenheit haben und dementsprechend in Bezug auf die Sensoren eine gleiche oder ähnliche Messaufgabe besteht, können die Sensoren der erfindungsgemäßen Prüfvorrichtung baugleich sein. Bei Prüfobjekten mit unterschiedlichen Oberflächenbeschaffenheiten auf den beiden Seiten können jedoch auch unterschiedliche Sensoren verwendet werden

Die Erfindung sieht vor, dass die Halterung zwei vorzugsweise plattenartige Einzelteile mit jeweils einer fensterartigen Aussparung zur Aufnahme des Prüfobjekts in einer Bezugsebene aufweist, die an ihren einander zugewandten Flächen als Prüfnormalflächen ausgebildet sind, wobei die Einzelteile in der Bezugsebene derart relativ zueinander versetzt miteinander verbunden sind, dass jeweils Prüfnormalflächen des einen Einzelteils von einem der Sensoren durch die Aussparung in dem anderen Einzelteil hindurch antastbar sind oder angetastet werden. Bei dieser Ausführungsform ist es ausreichend, ausschließlich die Kontaktflächen der Einzelteile der Halterung sehr eben feinzubearbeiten. Gleichzeitig ist die Messgenauigkeit erhöht, indem der Einfluss von Abweichungen der Geometrie des Prüfnormals auf das Messergebnis verringert ist.

Eine andere vorteilhafte Weiterbildung der erfindungsgemäßen Prüfvorrichtung sieht vor, dass die Halterung an wenigstens einer Prüfnormalfläche mit durch wenigstens einen Sensor erfassbaren Oberflächenmerkmalen versehen ist. Die entsprechenden Oberflächenmerkmale können beispielsweise eine Skala bilden, anhand derer die Vorschubbewegung einer Vorschubeinrichtung präzise erfasst werden kann. Eine entsprechende Skala kann aber auch verwendet werden, um Imperfektionen der verwendeten Sensoren zu detektieren und bei der Auswertung des Prüfergebnisses zu berücksichtigen.

Im Anspruch 11 ist ein erfindungsgemäßes Verfahren zur Prüfung von flachen Prüfobjekten angegeben, bei dem eine erfindungsgemäße Prüfvorrichtung verwendet wird.

Dabei kann das Prüfobjekt insbesondere eine Bipolarplatte einer Brennstoffzelle oder eine Batteriefolie sein, wie dies vorteilhafte Weiterbildungen des erfindungsgemäßen Verfahrens vorsehen.

Die Erfindung wird nachfolgend unter Bezugnahme auf die beigefügte, stark schematisierte Zeichnung anhand von Ausführungsbeispielen näher erläutert. Es ist für den Fachmann ersichtlich, dass die einzelnen Merkmale eines Ausführungsbeispiels das Ausführungsbeispiel jeweils für sich genommen, also unabhängig von den weiteren Merkmalen, weiterbilden. Zum Gegenstand und Offenbarungsgehalt der vorliegenden Anmeldung gehören auch Kombinationen von Merkmalen der Vorrichtungsansprüche mit Merkmalen der Verfahrensansprüche. Zum Gegenstand und Offenbarungsgehalt der vorliegenden Anmeldung gehören ferner Kombinationen von Merkmalen eines Ausführungsbeispiels mit Merkmalen eines anderen Ausführungsbeispiels. Ebenfalls gehören zum Gegenstand und Offenbarungsgehalt der vorliegenden Anmeldung Unterkombinationen der Patentansprüche, bei denen wenigstens ein Merkmal eines Patentanspruchs weggelassen oder durch ein anderes Merkmal ersetzt ist

Es zeigt:
- Fig. 1: stark schematisiert und in einer Perspektivansicht ein erstes Ausführungsbeispiel einer erfindungsgemäßen optischen Prüfvorrichtung,
- Fig. 2: in einer schematisierten Seitenansicht die Prüfvorrichtung gemäß Fig. 1 während eines Prüfvorganges,
- Fig. 3: in einer schematisierten Seitenansicht eine Halterung eines zweiten Ausführungsbeispieles einer erfindungsgemäßen Prüfvorrichtung und
- Fig. 4: die Halterung gemäß Fig. 3 in einer Draufsicht.

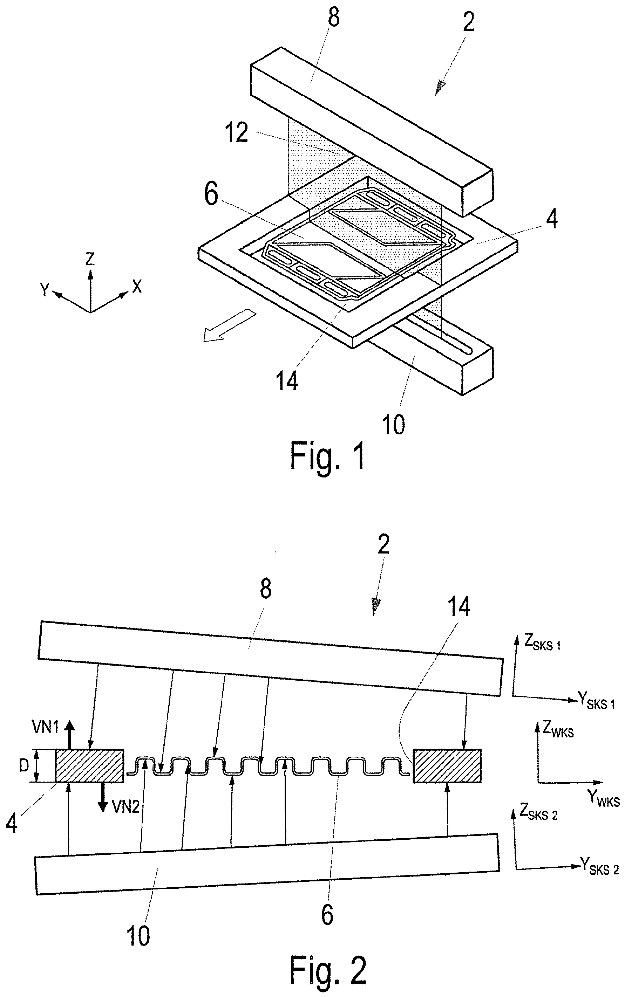

Nachfolgend werden unter Bezugnahme auf Fig. 1 bis Fig. 4 Ausführungsbeispiele einer erfindungsgemäßen Prüfvorrichtung näher erläutert.

In Fig. 1 ist ein erstes Ausführungsbeispiel einer erfindungsgemäßen optischen Prüfvorrichtung 2 zur Prüfung von flachen Prüfobjekten dargestellt, das eine Halterung 4 für ein Prüfobjekt 6 aufweist, das bei diesem Ausführungsbeispiel durch eine Bipolarplatte einer Brennstoffzelle gebildet ist.

Die Prüfvorrichtung 2 weist erfindungsgemäß zwei optische Sensoren 8, 10 zur Erfassung der dreidimensionalen Oberflächentopographie des Prüfobjektes 6 auf. Die Sensoren 8, 10 sind bezogen auf ihre Messrichtung einander zugewandt angeordnet, sodass sie das Prüfobjekt 6 von seinen beiden gegenüberliegenden Seiten antasten.

Erfindungsgemäß ist die Halterung 4 wenigstens abschnittsweise als Prüfnormal ausgebildet und derart relativ zu den Sensoren 8, 10 angeordnet, dass die Sensoren 8, 10 das Prüfobjekt 6 von gegenüberliegenden Seiten antasten und bei der Erfassung des Prüfobjekts 6 die Halterung 4 als Prüfnormal miterfasst wird.

Die Halterung 4 besteht bei dem dargestellten Ausführungsbeispiel aus einer planparallelen Platte und ist als Rahmen 12 ausgebildet. Wie aus Fig. 1 ersichtlich ist, ist bei dem dargestellten Ausführungsbeispiel der Rahmen als in Umfangsrichtung geschlossener Rahmen mit einer zentrischen fensterartigen Aussparung 14 ausgebildet. Der Rahmen 14 weist an seiner Aussparung eine Auflagestruktur auf, auf die das Prüfobjekt 6 lose aufgelegt wird. Die Auflagestruktur kann beispielsweise in Umfangsrichtung des Rahmens zueinander beabstandete Nasen aufweisen.

Wie aus Fig. 1 ersichtlich ist, ist die Anordnung der Halterung 4 und der Sensoren 8, 10 relativ zueinander derart, dass bei der Erfassung des Prüfobjekts 6 durch die Sensoren 8, 10 der Rahmen 12 wenigstens abschnittsweise miterfasst wird. Durch Miterfassung des Rahmens als Prüfnormal ist die Position des Prüfobjekts 6 im Raum eindeutig definiert, sodass die Messwerte der Sensoren 8, 10 zueinander in Beziehung gesetzt werden können, ohne dass eine vorherige mechanische oder rechnerische Ausrichtung des Prüfobjekts erforderlich ist.

Bei dem dargestellten Ausführungsbeispiel sind die Sensoren 8, 10 baugleich ausgebildet und zur linienförmigen Erfassung des Prüfobjekts ausgebildet und eingerichtet. Zur Abtastung des Prüfobjekts 6 wird die Halterung 4 durch eine Vorschubeinrichtung in X-Richtung bewegt. Der Aufbau einer entsprechenden Vorschubeinrichtung ist dem Fachmann allgemein bekannt und wird daher hier nicht näher erläutert. Die Vorschubeinrichtung ist in der Zeichnung zur Vereinfachung der Darstellung auch nicht gezeigt

Geeignete Sensoren sind dem Fachmann allgemein bekannt und werden daher hier nicht näher erläutert.

Die Halterung 4 ist zumindest in den Bereichen, die während der Erfassung der Oberfläche des Prüfobjekts 6 miterfasst werden und damit Prüfnormalflächen bilden, feinbearbeitet, sodass die Geometrie der Halterung zumindest in diesen Bereichen präzise bestimmt und vorbekannt ist, sodass die Halterung 4 erfindungsgemäß als Prüfnormal bzw. Messnormal fungiert.

Die bei der Abtastung des Prüfobjekts 6 durch die Sensoren 8, 10 gewonnenen Messwerte werden durch eine mit den Sensoren 8, 10 in Datenübertragungsverbindung stehende Auswertungseinrichtung ausgewertet, sodass am Ende des Prüfvorganges als Prüfergebnis bzw. Messergebnis die tatsächliche Geometrie des Prüfobjekts 6 zur Verfügung steht.

Dadurch, dass erfindungsgemäß eine geometrische Prüfung des Prüfobjekts ohne vorherige mechanische oder rechnerische Ausrichtung möglich ist, ist die Prüfung von Prüfobjekten schnell und einfach gestaltet.

Da zur Prüfung beider Seiten des Prüfobjekts 6 eine Veränderung der Lage des Prüfobjekts 6 nicht erforderlich ist, sind Messunsicherheiten vermieden und die Messgenauigkeit verbessert.

Fig. 2 zeigt in einer Seitenansicht das Ausführungsbeispiel gemäß Fig. 1, wobei die Mess- bzw. Antastrichtung der Sensoren 8, 10 idealerweise senkrecht zu einer Messebene ist, in der das Prüfobjekt 6 an der Halterung 4 gehalten ist. In Fig. 1 ist überhöht ein Ausrichtungsfehler des Sensors 8 durch Verkippen gegenüber der Messebene angedeutet.

Der Ausrichtungsfehler kann nach der Messung wie folgt korrigiert werden:
Der Sensor 8 erfasst Messwerte der Oberfläche der Oberseite des Prüfobjekts 6 in einem ersten Sensor-Koordinatensystem SKS1. Aus den Messwerten der Oberseite der Halterung 4 als Prüfnormal wird in der Auswertungseinrichtung eine Ebene berechnet und mit dem Normalenvektor dieser Ebene eine Koordinatentransformation der Messwerte der Oberfläche des Prüfobjekts 6 durchgeführt. Durch Auswertung vorher gewählter Merkmale der Oberseite, beispielsweise einer Kante, wird die Ebene im ersten Sensor-Koordinatensystem SKS1 um den Normalenvektor VN 1 in das Koordinatensystem des Prüfobjekts 6 (Werkstückkoordinatensystem WKS) gedreht. Damit liegen die Messwerte der Oberseite des Prüfobjekts 6 im WerkstüccKoordinatensystem vor.

In entsprechender Weise erfasst der Sensor 10 Messwerte der Oberfläche der Unterseite der Halterung 4, aus denen eine Ebene berechnet und mit dem Normalenvektor dieser Ebene eine Koordinatentransformation der Messwerte der Oberfläche des Prüfobjekts 6 durchgeführt wird. In zu dem Sensor 8 entsprechender Weise wird durch Auswahl vorher gewählter Merkmale der Unterseite, beispielsweise einer Kante, eine Ebene berechnet und um den Normalenvektor dieser Ebene die Ebene des Sensorkoordinatensystems SKS2 in das Werkstückkoordinatensystem WKS gedreht. Daran anschließend können die Messwerte in das Werkstücckoordinatensystem transformiert werden.

Im Ergebnis sind damit die Ober- und Unterseite des Prüfobjektes 6 in einem gemeinsamen Koordinatensystem erfasst und können damit einer weiteren Auswertung unterzogen werden.

Alternativ hierzu kann eine Korrektur während der Messung in der Y/Z-Ebene durchgeführt werden. In diesem Fall wird für jede Messlinie xi ein direkter Bezug zur Referenzebene hergestellt, sodass damit Bahnungenauigkeiten in Z-Richtung während der Bewegung in X-Richtung kompensiert werden. Eine Abweichung der Bahn in Y-Richtung kann durch Auswertung beispielsweise einer Kante der Halterung 4 festgestellt und entsprechend kompensiert werden.

Soweit erforderlich oder gewünscht, können die durch die Sensoren 8, 10 gewonnenen Daten als Bilder einer Bildverarbeitung unterzogen werden, um beispielsweise in einem Graubild eine Artefakt-Erkennung durchzuführen.

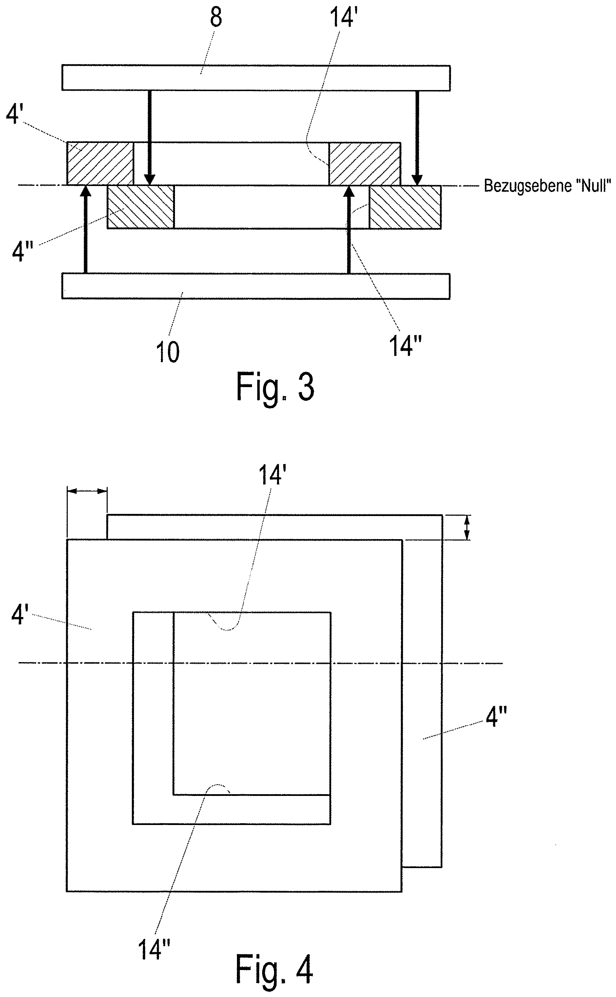

In Fig. 3 ist ein zweites Ausführungsbeispiel einer erfindungsgemäßen Prüfvorrichtung 2 dargestellt, das sich von dem ersten Ausführungsbeispiel in der Ausgestaltung der Halterung 4 unterscheidet.

Bei dem zweiten Ausführungsbeispiel weist die Halterung 4 zwei plattenartige, als Gleichteile ausgebildete rechteckförmige Einzelteile 4', 4" mit jeweils einer fensterartigen rechteckförmigen Aussparung 14,' 14" zur Aufnahme des Prüfobjekts 6 in einer Bezugsebene auf, die an ihren einander zugewandten Flächen als Prüfnormalflächen ausgebildet sind. Die Einzelteile 4', 4" sind in der Bezugsebene derart relativ zueinander versetzt miteinander verbunden, dass jeweils Prüfnormalflächen des einen Einzelteils 4' bzw. 4" von einem der Sensoren 8, 10 durch die Aussparung 14"bzw. 14' in dem anderen Einzelteil 4" bzw. 4' hindurch antastbar sind oder angetastet werden.

Wie aus Fig. 4 ersichtlich ist, entstehen durch den Versatz der Einzelteile 14', 14" und die Ausgestaltung der Kontaktflächen zwischen den Einzelteilen 14', 14" als Prüfnormalflächen 2 Flächen, die von beiden Seiten (Oberseite und Unterseite) sichtbar sind und durch die Sensoren 8, 10 angetastet bzw. erfasst werden können. Beide Flächen liegen in einer Ebene und definieren damit eine Nullebene, sodass Messfehler durch Parallelitätstoleranzen und Dickenschwankungen der Halterung 4 vermieden sind. Damit ist zuverlässig verhindert, dass Abweichungen der Geometrie der Halterung 4 als Prüfnormal von der vorgegebenen bzw. gewünschten Geometrie in das Messergebnis eingehen.

## Patentansprüche

1. Optische Prüfvorrichtung (2) zur Prüfung von flachen Prüfobjekten (6),
mit einer Halterung (4) für das Prüfobjekt (6),
mit wenigstens zwei optischen Sensoren (8, 10) zur Erfassung der dreidimensionalen Oberflächentopographie des Prüfobjektes (6), wobei die Halterung (4) wenigstens abschnittsweise als Prüfnormal ausgebildet und relativ zu den Sensoren (8, 10) derart angeordnet ist, dass die Sensoren (8, 10) das Prüfobjekt (6) von gegenüberliegenden Seiten antasten und bei der Erfassung des Prüfobjekts (6) die Halterung (4) als Prüfnormal wenigstens abschnittsweise miterfassen, und
mit einer Auswertungseinrichtung, welche mit den Sensoren (8, 10) in Verbindung steht und die tatsächliche Geometrie des Prüfobjekts (6) auswertet, wobei die Geometrie des Prüfnormals vorbekannt ist und wobei durch die als Prüfnormal bereitgestellte Referenz die die gegenüberliegenden Seiten des Prüfobjekts (6) repräsentierenden Messwerte der Sensoren (8, 10) zueinander in Beziehung gebracht werden, **dadurch gekennzeichnet, dass**:
die Halterung (4) zwei vorzugsweise plattenartige Einzelteile (4', 4") mit jeweils einer fensterartigen Aussparung (14', 14") zur Aufnahme des Prüfobjekts (6) in einer Bezugsebene aufweist, die an ihren einander zugewandten Flächen als Prüfnormalflächen ausgebildet sind, wobei die Einzelteile (4', 4") in der Bezugsebene derart relativ zueinander versetzt miteinander verbunden sind, dass jeweils Prüfnormalflächen des einen Einzelteils (4' bzw. 4") von einem der Sensoren (8, 10) durch die Aussparung (14" bzw. 14') in dem anderen Einzelteil (14", 14') hindurch antastbar sind oder angetastet werden.

2. Prüfvorrichtung nach Anspruch 1, wobei die Halterung (4) als Rahmen (12) ausgebildet ist.

3. Prüfvorrichtung nach Anspruch 2, wobei der Rahmen (12) als in Umfangsrichtung geschlossener Rahmen mit einer fensterartigen Aussparung ausgebildet ist

4. Prüfvorrichtung nach Anspruch 2 oder 3, wobei der Rahmen (12) eine Auflagestruktur aufweist, auf die das Prüfobjekt (6) lose auflegbar ist.

5. Prüfvorrichtung nach Anspruch 4, wobei die Auflagestruktur in Umfangsrichtung des Rahmens (12) zueinander beabstandete Nasen aufweist.

6. Prüfvorrichtung nach einem der vorhergehenden Ansprüche, wobei die Halterung (4) als planparallele Platte ausgebildet ist.

7. Prüfvorrichtung nach einem der vorhergehenden Ansprüche, wobei die Halterung wenigstens (4) abschnittsweise beschichtet ist.

8. Prüfvorrichtung nach einem der vorhergehenden Ansprüche, wobei wenigstens ein optischer Sensor (8, 10) zur flächigen Erfassung des Prüfobjekts (6) ausgebildet und eingerichtet ist.

9. Prüfvorrichtung nach einem der Ansprüche 1 bis 7, wobei wenigstens ein optischer Sensor (8, 10) zur linienförmigen Erfassung des Prüfobjekts (6) ausgebildet und eingerichtet ist, wobei eine Vorschubeinrichtung zur Relativbewegung der Halterung (4) relativ zu den Sensoren (8, 10) vorgesehen ist, derart, dass während des Vorschubs das Prüfobjekt (6) durch den Sensor abgetastet wird.

10. Prüfvorrichtung nach einem der vorhergehenden Ansprüche, wobei die Halterung (6) an wenigstens einer Prüfnormalfläche mit durch wenigstens einen Sensor (8, 10) erfassbaren Oberflächenmerkmalen versehen ist.

11. Verfahren zur Prüfung von flachen Prüfobjekten, wobei eine Prüfvorrichtung nach einem der vorhergehenden Ansprüche verwendet wird.

12. Verfahren nach Anspruch 11, wobei das Prüfobjekt eine Bipolarplatte einer Brennstoffzelle ist.

13. Verfahren nach Anspruch 11, wobei das Prüfobjekt eine Batteriefolie ist.

## Claims

1. Optical testing device (2) for testing flat test objects (6),
having a holder (4) for the test object (6),
having at least two optical sensors (8, 10) for detecting the three-dimensional surface topography of the test object (6), wherein the holder (4) is formed at least in sections as a test standard and is arranged relative to the sensors (8, 10) in such a way that the sensors (8, 10) touch the test object (6) from opposite sides and, when the test object (6) is detected, also detect the holder (4) as a test standard at least in sections, and
having an evaluation device which is connected to the sensors (8, 10) and evaluates the actual geometry of the test object (6), wherein the geometry of the test standard is known in advance and wherein, by means of the reference provided as a test standard, the measured values of the sensors (8, 10) which represent the opposite sides of the test object (6) are related to one another; **characterized in that**:
the holder (4) has two preferably plate-like individual parts (4', 4") with in each case one window-like cutout (14', 14") for receiving the test object (6) in a reference plane, which individual parts are formed on their mutually facing surfaces as test standard surfaces, wherein the individual parts (4', 4") are connected to one another in a manner offset relative to one another in the reference plane in such a way that in each case test standard surfaces of one individual part (4' or 4") can be touched or are touched by one of the sensors (8, 10) through the cutout (14" or 14') in the other individual part (14", 14').

2. Testing device according to Claim 1, wherein the holder (4) is formed as a frame (12).

3. Testing device according to Claim 2, wherein the frame (12) is formed as a frame which is closed in the circumferential direction and has a window-like cutout.

4. Testing device according to Claim 2 or 3, wherein the frame (12) has a supporting structure on which the test object (6) can be loosely placed.

5. Testing device according to Claim 4, wherein the supporting structure has lugs which are spaced apart from one another in the circumferential direction of the frame (12).

6. Testing device according to one of the preceding claims, wherein the holder (4) is formed as a plane-parallel plate.

7. Testing device according to one of the preceding claims, wherein the holder (4) is coated at least in sections.

8. Testing device according to one of the preceding claims, wherein at least one optical sensor (8, 10) is formed and set up for areally detecting the test object (6).

9. Testing device according to one of Claims 1 to 7, wherein at least one optical sensor (8, 10) is formed and set up for linearly detecting the test object (6), wherein a feed device is provided for moving the holder (4) relative to the sensors (8, 10) in such a way that, during the feed, the test object (6) is scanned by the sensor.

10. Testing device according to one of the preceding claims, wherein the holder (6) is provided, on at least one test normal surface, with surface features which can be detected by at least one sensor (8, 10).

11. Method for testing flat test objects, wherein a testing device according to one of the preceding claims is used.

12. Method according to Claim 11, wherein the test object is a bipolar plate of a fuel cell.

13. Method according to Claim 11, wherein the test object is a battery foil.

## Revendications

1. Dispositif de contrôle optique (2) pour le contrôle d'objets de contrôle plats (6),
comprenant un support (4) pour l'objet de contrôle (6),
comprenant au moins deux capteurs optiques (8, 10) pour la détection de la topographie de surface tridimensionnelle de l'objet de contrôle (6), le support (4) étant réalisé au moins en partie sous forme de norme de contrôle et étant disposé par rapport aux capteurs (8, 10) de telle sorte que les capteurs (8, 10) palpent l'objet de contrôle (6) depuis des côtés opposés et, lors de la détection de l'objet de contrôle (6), détectent le support (4) en tant que norme de contrôle au moins en partie, et
comprenant un dispositif d'évaluation qui est en liaison avec les capteurs (8, 10) et évalue la géométrie réelle de l'objet de contrôle (6), la géométrie de la norme de contrôle étant connue au préalable et les valeurs de mesure des capteurs (8, 10) représentant les côtés opposés de l'objet de contrôle (6) étant mises en relation les unes avec les autres par la référence fournie en tant que norme de contrôle ; **caractérisé en ce que** :
le support (4) présente deux parties individuelles de préférence en forme de plaque (4', 4") avec à chaque fois un évidement en forme de fenêtre (14', 14") pour la réception de l'objet de contrôle (6) dans un plan de référence, qui sont réalisées au niveau de leurs surfaces tournées les unes vers les autres sous forme de surfaces normales de contrôle, les parties individuelles (4', 4") étant connectées les unes aux autres de manière décalée les unes par rapport aux autres dans le plan de référence de telle sorte que des surfaces normales de contrôle de l'une des parties individuelles (4' ou 4") peuvent être palpées ou sont palpées à chaque fois par l'un des capteurs (8, 10) à travers l'évidement (14" ou 14') dans l'autre partie individuelle (14", 14').

2. Dispositif de contrôle selon la revendication 1, dans lequel le support (4) est réalisé sous forme de cadre (12).

3. Dispositif de contrôle selon la revendication 2, dans lequel le cadre (12) est réalisé sous forme de cadre fermé dans la direction périphérique avec un évidement en forme de fenêtre.

4. Dispositif de contrôle selon la revendication 2 ou 3, dans lequel le cadre (12) présente une structure d'appui sur laquelle l'objet de contrôle (6) peut être posé de manière lâche.

5. Dispositif de contrôle selon la revendication 4, dans lequel la structure d'appui présente des ergots espacés les uns des autres dans la direction périphérique du cadre (12).

6. Dispositif de contrôle selon l'une quelconque des revendications précédentes, dans lequel le support (4) est réalisé sous forme de plaque plane-parallèle.

7. Dispositif de contrôle selon l'une quelconque des revendications précédentes, dans lequel le support (4) est revêtu au moins par sections.

8. Dispositif de contrôle selon l'une quelconque des revendications précédentes, dans lequel au moins un capteur optique (8, 10) est réalisé et agencé pour la détection plane de l'objet de contrôle (6).

9. Dispositif de contrôle selon l'une quelconque des revendications 1 à 7, dans lequel au moins un capteur optique (8, 10) est réalisé et agencé pour la détection linéaire de l'objet de contrôle (6), un dispositif d'avance étant prévu pour le déplacement relatif du support (4) par rapport aux capteurs (8, 10) de telle sorte que, pendant l'avance, l'objet de contrôle (6) est palpé par le capteur.

10. Dispositif de contrôle selon l'une quelconque des revendications précédentes, dans lequel le support (6) est pourvu, sur au moins une surface normale de contrôle, de caractéristiques de surface détectables par au moins un capteur (8, 10).

11. Procédé pour le contrôle d'objets de contrôle plats, un dispositif de contrôle selon l'une quelconque des revendications précédentes étant utilisé.

12. Procédé selon la revendication 11, dans lequel l'objet de contrôle est une plaque bipolaire d'une pile à combustible.

13. Procédé selon la revendication 11, dans lequel l'objet de contrôle est une feuille de batterie.
